# EUROPÄISCHE PATENTSCHRIFT

(11) **EP 3 410 664 B1**
(45) Veröffentlichungstag und Bekanntmachung des Hinweises auf die Patenterteilung: **30.06.2021**
(21) Anmeldenummer: 17173374.4
(22) Anmeldetag: 30.05.2017
(51) Int. Cl.: H04L 29/06, H04M 3/436, H04M 7/00, H04M 3/42

(54) **VERFAHREN ZUM SCHÜTZEN MINDESTENS EINES KOMMUNIKATIONSPARTNERS IN EINEM TECHNISCHEN KOMMUNIKATIONSNETZWERK**
METHOD FOR PROTECTING AT LEAST ONE COMMUNICATION PARTNER IN A TECHNICAL COMMUNICATION NETWORK
PROCÉDÉ DE PROTECTION D'AU MOINS UN PARTENAIRE DE COMMUNICATION DANS UN RÉSEAU TECHNIQUE DE COMMUNICATION

(43) Veröffentlichungstag der Anmeldung: 05.12.2018
(73) Patentinhaber: Deutsche Telekom AG, 53113 Bonn (DE)
(72) Erfinder: Haberkorn, Günter, 92262 Birgland/Schwend (DE)
(74) Vertreter: Raible Deissler Lehmann Patentanwälte PartG mbB

(56) Entgegenhaltungen:
- US-A1- 2008 310 604
- US-A1- 2010 158 233
- US-A1- 2016 182 547

## Beschreibung

Die vorgestellte Erfindung betrifft ein Verfahren zum Schützen eines Kommunikationspartners in einem technischen Kommunikationsnetzwerk vor automatisch generierten Anruferattacken und ein zur Durchführung des vorgestellten Verfahrens konfiguriertes Schutzsystem.

Nutzer eines technischen Kommunikationsnetzwerks, wie bspw. Nutzer von Mobiltelefonen, werden immer häufiger durch automatisch generierte Anruferattacken gestört. Dabei können die Anruferattacken bspw. als sogenannte "call bombs" eine Vielzahl von Anrufen in einem kurzen Zeitraum auf eine Leitung erzeugen, so dass die Leitung bzw. der damit verbundene Anschluss (Telefonanschluss) nicht mehr erreichbar ist.

Unter einem technischen Kommunikationsnetzwerk bzw. einem technischen Kommunikationsnetz ist im Rahmen der vorliegenden Offenbarung eine technische Infrastruktur für eine Übermittlung von Informationen/Daten zu verstehen.

Unter der Bezeichnung "Wangiri" sind Anruferattacken bekannt, bei denen mittels Lockanrufen ein von einem Teilnehmer kontaktierter Kommunikationspartner zum Rückruf auf eine kostenpflichtige Nummer animiert wird.

Unter der Bezeichnung "CLI Spoofing" sind Anruferattacken bekannt, bei denen eine Gewinnmarge eines Telekommunikationsdienstleisters erhöht wird, indem eine Länderzuweisung einer Anruferkennung im Rahmen eines sogenannten OBR-(Original based rating) Abrechnungsmodells von einem ersten Land zu einem zweiten Land geändert wird, so dass höhere Gebühren zu entrichten sind, da eine jeweilige Anruferkennung gemäß OBR in Abhängigkeit einer sogenannten CLI (calling line identification) erfolgt.

Zum Schutz vor Anruferattacken werden traditionellerweise sogenannte "SIM-Boxing-Verfahren" eingesetzt, die auf aktiven Testverbindungen basieren.

Weiterhin sind sogenannte "OTT Firewall" Technologien bekannt, bei denen sogenannte OTT ("over the top")-Inhalte, in deren Kontrolle oder Verbreitung kein Internet-Service-Provider involviert ist, von einer Weiterleitung an jeweilige Teilnehmer eines Kommunikationsnetzwerk ausgeschlossen werden.

Die US 2016/182547 A1 beschreibt ein System zur Abwehr von DDoS-Attacken in einem VolP-System.

Die US 2008/310604 A1 beschreibt ein Verfahren zum Überprüfen eines Anrufers mittels eines Turing Tests.

Die US 2010/158233 A1 beschreibt ein Verfahren zum Überprüfen eines zukünftigen Anrufers mittels eines Turing Tests in Reaktion auf eine Eingabe eines Nutzers.

Vor diesem Hintergrund ist es eine Aufgabe der vorgestellten Erfindung, eine Möglichkeit zum Schützen eines Kommunikationspartners eines Kommunikationsnetzwerks vor automatisch generierten Anruferattacken bereitzustellen.

Zur Lösung der voranstehend genannten Aufgabe werden ein Verfahren und ein Schutzsystem gemäß den beigefügten Ansprüchen vorgestellt.

Entsprechend wird ein Verfahren zum Schützen mindestens eines Kommunikationspartners in einem technischen Kommunikationsnetzwerk vor automatisch generierten Anruferattacken vorgestellt. Dazu ist vorgesehen, dass mindestens ein potentiell angreifender und den mindestens einen Kommunikationspartner kontaktierender, d. h. anrufender Teilnehmer des Kommunikationsnetzwerks mittels einer auf mindestens einem mit dem Kommunikationsnetzwerk in kommunikativer Verbindung stehenden Server implementierten Überprüfungsfunktion, die ein Kommunikationsverhalten des Teilnehmers und/oder ein Kommunikationsverhalten des von dem Teilnehmer kontaktierten Kommunikationspartners auswertet, überprüft wird. Dabei ist vorgesehen, dass in Abhängigkeit eines Ergebnisses einer mittels der Überprüfungsfunktion durchgeführten Auswertung des Kommunikationsverhaltens des Teilnehmers und/oder des Kommunikationsverhaltens des von dem Teilnehmer kontaktierten Kommunikationspartners eine automatische Sicherheitsüberprüfung des Teilnehmers mittels einer auf dem mindestens einen Server implementierten Sicherheitsfunktion erfolgt, wobei die Sicherheitsfunktion einen Turingtest zum Überprüfen, ob es sich bei dem Teilnehmer um einen Mensch handelt, umfasst, und wobei eine Weiterleitung des Teilnehmers zu dem mindestens einen Kommunikationspartner in dem Kommunikationsnetzwerk in Abhängigkeit eines Ergebnisses der Sicherheitsüberprüfung behandelt wird. Das bedeutet, dass die Weiterleitung unter Berücksichtigung des Ergebnisses der Sicherheitsüberprüfung bspw. realisiert, d. h. vorgenommen, oder verhindert wird. Je nach Ergebnis der Sicherheitsüberprüfung wird die Weiterleitung unverändert, d. h. wie bereits bis dahin in dem Kommunikationsnetz eingeleitet, oder modifiziert, bspw. unter Verwendung einer anderen Anruferkennung, oder gar nicht vorgenommen.

Im Rahmen der vorliegenden Offenbarung wird unter einem "den mindestens einen Kommunikationspartner kontaktierenden Teilnehmer" ein Teilnehmer verstanden, der zumindest versucht, den mindestens einen Kommunikationspartner über eine Datenverbindung, insbesondere eine Telefonverbindung zu erreichen. Das bedeutet, dass unter die genannte Formulierung auch bereits eine Initiierung einer derartigen Datenverbindung, insbesondere Telefonverbindung (ggf. ohne deren finale Herstellung) zu subsummieren ist.

Ausgestaltungen der vorgestellten Erfindung ergeben sich aus der Beschreibung und den abhängigen Ansprüchen.

Unter einer Anruferattacke ist im Kontext der vorgestellten Erfindung ein Vorgang zu verstehen, bei dem mittels mindestens einer Kommunikationsverbindung in einem Kommunikationsnetzwerk ein Schaden für einen jeweilig kontaktierten Kommunikationspartner oder einen Betreiber eines entsprechenden Kommunikationsnetzwerks entsteht. Anruferattacken können bspw. eine Leitung und damit einen Telefonanschluss blockieren und/oder ungewollte Kosten für einen Anrufer bzw. einen angerufenen Kommunikationspartner verursachen.

In Ausgestaltung handelt es sich bei dem Kommunikationsnetzwerk um ein Telefonnetz, das insbesondere dazu konfiguriert ist, Telefongespräche (Telefonie) abzuwickeln.

Unter einem Teilnehmer ist im Kontext der vorgestellten Erfindung ein in einem Kommunikationsnetzwerk agierendes Netzwerkelement und/oder ein in dem Kommunikationsnetz agierender Netzwerkknoten zu verstehen. Bei dem Netzwerkelement kann es sich bspw. um eine Endstelle handeln. Dabei kann es sich insbesondere um eine automatische Maschine zum Erzeugen von Anruferattacken handeln. Alternativ dazu kann es sich aber auch um ein Endgerät eines Anrufers handeln. Ggf. indirekt, d. h. über eine daran angebundene Endstelle überprüfbar, ist als Teilnehmer auch ein Telekommunikationsdienstleiter, wie bspw. ein "Carrier" bzw. "Transitcarrier", der über einen Netzwerkknoten in eine Kommunikationsverbindung zwischen der Endstelle, d. h. einem Anrufer, und einem angerufenen Kommunikationspartner eingreift und diese betrügerisch manipuliert, bspw. eine dem Anrufer originär zugeordnete Anruferkennung ändert.

Unter einem Kommunikationspartner ist im Kontext der vorgestellten Erfindung ein von einem Teilnehmer in einem Kommunikationsnetzwerk kontaktiertes Netzwerkelement und/oder ein Netzwerkknoten zu verstehen. Dabei kann es sich wiederum um eine Endstelle, wie bspw. ein Telefon handeln.

Unter einem Kommunikationsverhalten eines Teilnehmers eines Kommunikationsnetzwerks ist im Kontext der vorgestellten Erfindung eine Aktivität des Teilnehmers in dem Kommunikationsnetzwerk, d. h. bspw. eine Häufigkeit von durch den Teilnehmer initiierten bzw. durchgeführten Anrufen, eine Verwendung spezifischer Netzwerkressourcen, wie Bandbreite, d. h. genutzter Frequenzbereich, und/oder zum jeweiligen Verbindungsaufbau und jeweiligen Weiterleitung (zwischen jeweiligen Carrier) in dem Kommunikationsnetz verwendete Anruferkennung(en), zu verstehen.

Das vorgestellte Verfahren dient insbesondere zum Schutz mindestens eines Kommunikationspartners in einem Kommunikationsnetzwerk vor sogenannten "Fraud" Attacken bzw. betrügerischen Anruferattacken. Dazu ist vorgesehen, dass ein jeweiliger den mindestens einen Kommunikationspartner kontaktierender Teilnehmer des Kommunikationsnetzwerks mittels der erfindungsgemäß vorgesehenen Überprüfungsfunktion, die auf einem von dem Kommunikationsnetzwerk umfassten Server ausgeführt wird, überprüft wird. Dazu kann die Überprüfungsfunktion bspw. eine Häufigkeit von durch den jeweiligen Teilnehmer des Kommunikationsnetzwerks in einem vorgegebenen Zeitraum initiierten und/oder durchgeführten Anrufen und/oder eine Häufigkeit von von dem mindestens einen durch den jeweiligen Teilnehmer kontaktierten Kommunikationspartner in einem vorgegebenen Zeitraum empfangenen Anrufen erfassen und auswerten. Weiterhin kann die Überprüfungsfunktion eine Struktur einer Anruferkennung, d. h. eines dem jeweiligen Teilnehmer des Kommunikationsnetzwerks zugewiesenen Identifikationscodes, wie bspw. eine Rufnummer, analysieren, um bspw. eine Manipulation der Anruferkennung festzustellen und/oder bekanntermaßen böswillig agierende Vermittlungszentralen bzw. Telekommunikationsdienstleister, Carrier, zu sperren.

Sollte ein Verhalten eines jeweiligen Teilnehmers auffällig sein, d. h. gegen eine bspw. in einer bspw. von dem Server abrufbaren Tabelle hinterlegte Regel verstoßen und bspw. eine Häufigkeit von durch den Teilnehmer in einem vorgegebenen Zeitraum initiierten bzw. durchgeführten Anrufen einen vorgegebenen Grenzwert überschreiten, wird die erfindungsgemäß vorgesehene Sicherheitsfunktion aktiviert.

Insbesondere ist vorgesehen, dass die erfindungsgemäß vorgesehene Überprüfungsfunktion von einem jeweiligen Teilnehmer ausgehende bzw. bei einem jeweiligen Kommunikationspartner eingehende Anrufe, insbesondere Sprachanrufe, abfängt und die Anrufe auf in einem Sicherheitskatalog hinterlegte Sicherheitskriterien hin auswertet und bewertet. Dabei kann der Sicherheitskatalog bspw. eine Struktur für eine Anruferkennung eines jeweiligen anrufenden Teilnehmers umfassen, so dass, wenn sich die Anruferkennung des anrufenden Teilnehmers von der in dem Sicherheitskatalog hinterlegten Struktur unterscheidet, der anrufende Teilnehmer als sicherheitsrelevant eingestuft wird und automatisch mittels der erfindungsgemäß vorgesehenen Sicherheitsfunktion überprüft wird.

Die erfindungsgemäße Sicherheitsfunktion umfasst einen Turingtest, wie bspw. einen sogenannten "Captcha", der von einem durch die Überprüfungsfunktion als auffällig erkannten Teilnehmer zu lösen bzw. zu erkennen ist. Sollte der Teilnehmer den Turingtest nicht lösen bzw. nicht bestehen, wird der Teilnehmer für eine Weiterleitung bzw. eine Verbindung zu jeweiligen weiteren Kommunikationspartnern des Kommunikationsnetzwerks gesperrt. Durch den Turingtest kann ein menschlicher Teilnehmer von einer Maschine unterschieden werden, da eine Maschine, die einen Anruf automatisch generiert und/oder manipuliert, den Turingtest nicht lösen bzw. nicht bestehen kann und entsprechend von einer Weiterleitung des von ihr initiierten und/oder manipulierten Anrufs an weitere Kommunikationspartner ausgeschlossen wird. Entsprechend werden die weiteren Kommunikationspartner vor einer Belästigung durch die Maschine bzw. den angreifenden Teilnehmer geschützt.

Es ist insbesondere vorgesehen, dass der von der erfindungsgemäß vorgesehenen Sicherheitsfunktion umfasste Turingtest von einem jeweiligen Nutzer, wie bspw. einem Verwalter eines Anschlusses eines Kommunikationsnetzwerks aktiviert bzw. deaktiviert werden kann. Dazu kann der Nutzer bspw. über einen Service-Mitarbeiter oder über eine Benutzerschnittstelle, wie bspw. ein Web-Portal für jeweilige Anschlüsse des Nutzers vorgegebene Einstellungen der Sicherheitsfunktion und/oder der Überprüfungsfunktion ändern. Dies bedeutet, dass, für den Fall, dass von der Überprüfungsfunktion ein angreifender Teilnehmer erkannt wird, der bspw. besonders häufig jeweilige Kommunikationspartner in einem Kommunikationsnetzwerk anruft, ein von dem angreifenden Teilnehmer durchzuführender Turingtest von einem jeweiligen angegriffenen Kommunikationspartner aktiviert bzw. deaktiviert werden kann. Eine Deaktivierung des Turingtests kann bspw. dann sinnvoll sein, wenn der potentiell angegriffene Kommunikationspartner einen Datenanruf, d. h. eine Übertragung von Daten über eine Telefonleitung erwartet und der als angreifend eingestufte Teilnehmer zu unrecht als angreifend eingestuft wurde. Sollte der potentiell angegriffene Kommunikationspartner den Turingtest deaktivieren, kann der potentiell angegriffene Kommunikationspartner weiterhin angegriffen werden. Sollte der potentiell angegriffene Kommunikationspartner den Turingtest aktivieren, wird ein potentiell angreifender Teilnehmer von einer Weiterleitung an den potentiell angegriffenen Kommunikationspartner ausgeschlossen.

Um den Turingtest zu aktivieren bzw. zu deaktivieren, kann ein Nutzer eines jeweiligen Kommunikationsnetzwerks, wie bspw. ein von einem Teilnehmer potentiell attackierter Kommunikationspartner, bspw. auf eine im Internet bereitgestellte Schnittstelle, d. h. bspw. eine über einen Browser aufrufbare Oberfläche zur Steuerung des vorgestellten Verfahrens, zugreifen oder eine Servicenummer anrufen, um einen Servicemitarbeiter zu kontaktieren, um jeweilige Regelungsparameter des vorgestellten Verfahrens, wie bspw. eine Sperrfunktion zum Sperren einer Weiterleitung an jeweilige Anschlüsse des Nutzers entsprechend jeweiligen Vorgaben des Nutzers anzupassen.

In einer möglichen Ausgestaltung des vorgestellten Verfahrens ist vorgesehen, dass das Verfahren ausschließlich dann durchgeführt wird, wenn der potentiell angreifende Teilnehmer eine Sprachnachricht über eine sogenannte Voice-Verbindung über das Kommunikationsnetzwerk an einen jeweiligen Kommunikationspartner versendet bzw. weiterleitet.

Um eine ungewollte Sperrung einer Weiterleitung, d. h. einer Verbindung, eines Datenanrufs von einem Teilnehmer zu einem Kommunikationspartner zu verhindern, kann es vorgesehen sein, dass das vorgestellte Verfahren ausschließlich für Sprachanrufe bzw. sogenannte "Voice-Verbindungen" durchgeführt wird.

In einer weiteren möglichen Ausgestaltung des vorgestellten Verfahrens ist vorgesehen, dass die Sicherheitsfunktion als Turingtest von dem potentiell angreifenden Teilnehmer eine Anruferkennung des Teilnehmers, d. h. bspw. dessen eigene Rufnummer, abfrägt. Dazu ist vorgesehen, dass der Teilnehmer, bspw. über eine Benutzerschnittstelle eines dem Teilnehmer zugeordneten Endgeräts, zur Eingabe seiner Rufnummer bzw. Anruferkennung aufgefordert wird und eine bspw. über die Benutzerschnittstelle, wie bspw. eine Tastatur und/oder ein Touchscreen und/oder ein Mikrofon, von dem Teilnehmer bereitgestellte Anruferkennung mit einer von dem Kommunikationsnetzwerk zum Kontaktieren des Kommunikationspartners aktuell verwendeten Anruferkennung, d. h. einer in einem jeweiligen Kommunikationsnetzwerk bei aktuell angefragtem Verbindungsaufbau erscheinende Anruferkennung bzw. einer sogenannten aktuellen "Calling Line Identification" (CLI) abgeglichen wird, und für den Fall, dass die von dem Teilnehmer bereitgestellte Anruferkennung von der zum Kontaktieren des Kommunikationspartners verwendeten Anruferkennung abweicht, entweder eine Weiterleitung des Teilnehmers zu dem Kommunikationspartner verhindert wird oder die aktuell durch den Teilnehmer eingegebene und bereitgestellte Anruferkennung zur Weiterleitung und ggf. zur Abrechnung verwendet wird und der offensichtlich missbräuchlich manipulierende Netzwerkknoten bzw. dessen Carrier als eigentlich angreifender Teilnehmer durch den durchgeführten Abgleich "ausgehebelt" wird.

Um bspw. sogenannte "CLI-Spoofing" Attacken, d. h. Attacken, bei denen eine bestimmte Anruferkennung vorgetäuscht wird bzw. eine Anruferkennung durch einen zwischengeschalteten Carrier automatisch manipuliert wird, um ein jeweiliges Abrechnungsmodell zu täuschen, abzuwehren, kann die erfindungsgemäß vorgesehene Überprüfung eines jeweiligen potentiell angreifenden Teilnehmers zum Abfragen einer Rufnummer bzw. Anruferkennung von dem potentiell angreifenden Teilnehmer genutzt werden. Anhand der durch den Teilnehmer bereitgestellten Anruferkennung kann eine jeweilige zur Kommunikation aktuell in einem jeweiligen Kommunikationsnetzwerk verwendete Anruferkennung verifiziert werden. Sollte die in dem Kommunikationsnetzwerk verwendete Anruferkennung von der von dem Teilnehmer bereitgestellten Anruferkennung abweichen, kann bspw. eine Vermittlungsstelle, über die der Teilnehmer aktuell weitergeleitet werden würde, für weitere Verbindungen gesperrt werden. Wie voranstehend erläutert, kann der Anruf des nur scheinbar angreifenden Teilnehmers auf Basis seiner aktuell eingegebenen Anruferkennung weitergeleitet werden, während der eigentlich angreifende Teilnehmer, nämlich der zwischengeschaltete Netzwerkknoten bzw. ein darüber agierender Carrier ausgehebelt und zukünftig gesperrt bzw. umgangen wird.

In einer weiteren möglichen Ausgestaltung des vorgestellten Verfahrens ist vorgesehen, dass als Turingtest eine automatisch generierte Aufforderung zum Übermitteln eines Codes an den mindestens einen Server durch den potentiell angreifenden Teilnehmer unter Verwendung einer Benutzerschnittstelle eines mit dem mindestens einen Server in kommunikativer Verbindung stehenden Endgeräts gewählt wird. Als von der erfindungsgemäß vorgesehenen Sicherheitsfunktion umfasster Turingtest eignen sich insbesondere sogenannte "Captcha" Funktionen, bei denen einem jeweiligen Teilnehmer ein Code bspw. durch Bilder oder mittels mindestens eines Audiosignals präsentiert wird und der Teilnehmer den Code erkennen und mittels einer Benutzerschnittstelle wiederholen bzw. rekapitulieren bzw. bereitstellen muss. Als Benutzerschnittstelle zum Übermitteln eines erkannten Codes eignet sich im Kontext des vorgestellten Verfahrens insbesondere ein Tastenfeld, ein Touchscreen und/oder ein Mikrofon eines zur Durchführung eines jeweiligen Anrufs verwendeten Endgeräts. Um einen per Sprache bereitgestellten Code zu erkennen, kann bspw. eine Spracherkennungssoftware auf dem zur Durchführung des Turingtests erfindungsgemäß verwendeten Server ausgeführt werden.

In einer weiteren möglichen Ausgestaltung des vorgestellten Verfahrens ist vorgesehen, dass als einzugebender Code eine Kennung des Teilnehmers, d. h. eine Anruferkennung, oder eine Kennung des angerufenen Kommunikationspartners gewählt wird.

Als Code, der im Rahmen eines Turingtests eingesetzt wird, um eine Maschine von einem Menschen zu unterscheiden bzw. eine Maschine als solche zu erkennen, eignet sich insbesondere eine Abfrage einer Anruferkennung eines jeweiligen Anrufers. Eine Anruferkennung, d. h. bspw. eine eigene Rufnummer, wird ein menschlicher Nutzer als Teilnehmer in der Regel schnell und einfach wiedergeben können. Eine Maschine als Teilnehmer dagegen wird in der Regel nicht die Intelligenz zur Verarbeitung einer solchen Anfrage aufweisen. Entsprechend kann mittels einer Abfrage der Anruferkennung ein menschlicher Nutzer von einer Maschine unterschieden werden.

In einer weiteren möglichen Ausgestaltung des vorgestellten Verfahrens ist vorgesehen, dass als einzugebender Code eine mittels eines Zufallsgenerators erzeugte Ziffernfolge und/oder eine Buchstabenfolge und/oder eine Kombination aus beiden gewählt wird.

Durch einen Code aus einer zufällig erzeugten Abfolge von Ziffern und/oder Buchstaben, die einem Teilnehmer bspw. einzeln mittels Bildern dargestellt werden, wird ein hohes Abstraktionsniveau zum Erkennen des Codes gefordert, das in der Regel nicht mittels einer Maschine erreicht werden kann. Entsprechend eignet sich ein derart bereitgestellter Code besonders vorteilhaft zum Erkennen von automatisch bzw. maschinell generierten Anruferattacken.

Weiterhin kann es vorgesehen sein, dass ein jeweiliger einzugebender Code einem jeweiligen durch die erfindungsgemäß vorgesehene Sicherheitsfunktion zu überprüfenden Teilnehmer mittels einer Audioausgabe bereitgestellt, d. h. vorgelesen wird.

In einer weiteren möglichen Ausgestaltung des vorgestellten Verfahrens ist vorgesehen, dass der einzugebende Code mittels einer Eingabe durch ein Mehrfrequenzwahlverfahren und/oder einer Spracheingabe eingegeben werden muss, um ein Ergebnis der Sicherheitsfunktion zu ermöglichen, das die Weiterleitung des Teilnehmers zu dem Kommunikationspartner in dem Kommunikationsnetzwerk erlaubt.

Durch eine Eingabe mittels eines Mehrfrequenzwahlverfahrens, d. h. eines sogenannten "DTMF" (dual-tone multi-frequency) Verfahrens, wird ein zu überprüfender Teilnehmer dazu angehalten, ein Tastenfeld eines jeweiligen Verbindungsgeräts zur Eingabe eines jeweiligen Codes zu verwenden. Da eine Betätigung eines Tastenfelds einem maschinellen Angreifer in der Regel nicht möglich ist, wird ein maschineller Angreifer einen jeweiligen Code nicht mittels eines Mehrfrequenzwahlverfahrens bereitstellen können. Entsprechend kann durch eine Anforderung zur Eingabe eines Codes mittels eines Mehrfrequenzwahlverfahrens ein maschineller Angreifer von einem Menschen unterschieden werden. Weiterhin kann es vorgesehen sein, dass der Code mittels einer Spracheingabe bereitzustellen ist. Eine von einem Menschen bereitgestellte Spracheingabe kann mittels eines Klassifikationsverfahrens von einem mittels einer Maschine bereitgestellten Verfahren unterschieden werden, so dass unter Verwendung eines derartigen Klassifikationsverfahrens, das bspw. auf einem neuronalen Netzwerk oder einer Support-Vector-Maschine basiert, festgestellt werden kann, ob ein jeweiliges Sprachsignal von einem Menschen oder einer Maschine bereitgestellt wurde. Dabei kann ein derartiges Klassifikationsverfahren auf dem erfindungsgemäß vorgesehenen Server ausgeführt werden.

In einer weiteren möglichen Ausgestaltung des vorgestellten Verfahrens ist vorgesehen, dass die Überprüfungsfunktion überprüft, ob der Teilnehmer in einem vorgegebenen Zeitraum eine vorgegebene Anzahl von von ihm initiierten bzw. für ihn aufzubauenden Kommunikationsverbindungen, insbesondere Telefonverbindungen, überschreitet. Dabei ist vorgesehen, dass für den Fall, dass der Teilnehmer in dem vorgegebenen Zeitraum die vorgegebene Anzahl von Kommunikationsverbindungen überschreitet, die Sicherheitsfunktion zum Überprüfen des Teilnehmers aktiviert wird.

Um eine automatisch generierte Anruferattacke mittels des erfindungsgemäßen Verfahrens zu erkennen, ist vorgesehen, dass ein Kommunikationsverhalten eines potentiell angreifenden Teilnehmers eines Kommunikationsnetzwerks mittels der erfindungsgemäß vorgesehenen Überprüfungsfunktion überprüft wird, um zu überprüfen, ob der Teilnehmer potentiell gefährdend ist und ggf. mittels der erfindungsgemäß vorgesehenen Sicherheitsfunktion zu testen ist. Eine Möglichkeit zur Überprüfung, ob ein jeweiliger Teilnehmer potentiell gefährdend ist, besteht darin, eine Anzahl von durch den jeweiligen Teilnehmer in einem vorgegebenen Zeitraum, von bspw. einigen, insbesondere 30 Sekunden, initiierten und/oder durchgeführten Anrufen zu ermitteln und die Anzahl mit einem vorgegebenen Schwellenwert abzugleichen.

In einer weiteren möglichen Ausgestaltung des vorgestellten Verfahrens ist vorgesehen, dass die Überprüfungsfunktion überprüft, ob der Teilnehmer einen Kommunikationspartner kontaktierten möchte, der in einem vorgegebenen Zeitraum mindestens von einer vorgegebenen Anzahl an Teilnehmern des Kommunikationsnetzwerks kontaktiert wurde und bei dem für den Fall, dass der Kommunikationspartner in dem vorgegebenen Zeitraum von mindestens der vorgegebenen Anzahl an Teilnehmern kontaktiert wurde, die Sicherheitsfunktion zum Überprüfen der jeweiligen den Kommunikationspartner in dem vorgegebenen Zeitraum kontaktierenden Teilnehmer aktiviert wird.

Um einen Kommunikationspartner in einem Kommunikationsnetzwerk vor sogenannten "call bombs" zu schützen, bei denen der Kommunikationspartner von einer Vielzahl Teilnehmer, die einem Angreifer zugeordnet sind bzw. von einem Angreifer betrieben werden, in kurzen Abständen über einen langen Zeitraum hinweg kontinuierlich angerufen wird, kann es vorgesehen sein, dass jeweilige den Kommunikationspartner kontaktierende Teilnehmer mittels der Sicherheitsfunktion überprüft werden. Dazu kann eine Anzahl von den Kommunikationspartner in einem vorgegebenen Zeitraum kontaktierenden Teilnehmern ermittelt und mit einem vorgegebenen Schwellenwert abgeglichen werden. Es ist denkbar, dass der Schwellenwert bspw. von einem Betreiber des Kommunikationsnetzwerks fest vorgegeben ist oder von dem Kommunikationspartner bspw. mittels einer grafischen Benutzerschnittstelle vorgegeben wird. Sollte die Anzahl von den Kommunikationspartner in dem vorgegebenen Zeitraum kontaktierenden Teilnehmern über dem vorgegebenen Schwellenwert liegen, werden alle den Kommunikationspartner in dem vorgegebenen Zeitraum kontaktierenden Teilnehmer automatisch mittels der erfindungsgemäß vorgesehenen Sicherheitsfunktion überprüft.

In einer weiteren möglichen Ausgestaltung des vorgestellten Verfahrens ist vorgesehen, dass die auf dem mindestens einen Server ausgeführte Überprüfungsfunktion eine dem Teilnehmer mittels eines Identifikationsmoduls zur Kommunikation in dem Kommunikationsnetzwerk zugordnete Kennung bzw. Anruferkennung mittels einer durch den mindestens einen Server ausgeführten Plausibilitätsprüfung überprüft wird, und bei dem für den Fall, dass die Kennung des Teilnehmers durch die Plausibilitätsprüfung als nicht plausibel eingestuft wird, die Sicherheitsfunktion zur Überprüfung des Teilnehmers aktiviert wird.

Zum Überprüfen, ob ein jeweiliger Teilnehmer eine Maschine zum Generieren von maschinellen Anruferattacken ist, kann weiterhin vorgesehen sein, dass eine Kennung des Teilnehmers, wie bspw. eine sogenannte "Calling Line Identification (CLI)" bzw. eine Anruferkennung, d. h. insbesondere eine Nummer des Anrufers einer Plausibilitätsprüfung unterzogen wird. Eine derartige Plausibilitätsprüfung kann bspw. einen Abgleich einer Struktur, wie bspw. einer Anzahl von Ziffern und/oder Buchstaben der Kennung mit einem vorgegebenen Schema, wie bspw. einem E-164-Standard, einer vorgegeben Mindestlänge bzw. Höchstlänge, oder jedem weiteren vorgegebenen Schema umfassen. Insbesondere kann vorgesehen sein, dass als Schema eine Länge der Anruferkennung zwischen 8 und 11 Zeichen bzw. Ziffern vorgegeben wird, so dass für den Fall, dass eine Anruferkennung erkannt wird, die kürzer oder länger als 8 bis 11 Zeichen bzw. Ziffern ist, die Anruferkennung automatisch mittels der erfindungsgemäß vorgesehenen Sicherheitsfunktion überprüft wird.

In einer weiteren möglichen Ausgestaltung des vorgestellten Verfahrens ist vorgesehen, dass die Plausibilität der Kennung des Teilnehmers mittels einer Liste an freizugebenden Kennungen oder einer Liste an zu sperrenden Kennungen überprüft wird.

Selbstverständlich kann ein Abgleich einer jeweiligen Kennung zur Plausibilitätsprüfung eines Teilnehmers mit einer vorgegebenen Freigabeliste, d. h. einer sogenannten "Whitelist" oder einer Sperrliste, d. h. einer sogenannten "Blacklist" erfolgen.

In einer weiteren möglichen Ausgestaltung des vorgestellten Verfahrens ist vorgesehen, dass jeweilige Listen an freizugebenden Kennungen und/oder jeweilige Listen an zu sperrenden Kennungen von einem Nutzer des Kommunikationsnetzwerks, wie bspw. einem potentiell von einem Teilnehmer attackierten Kommunikationspartner, konfiguriert und bspw. geändert werden.

Es kann vorgesehen sein, dass eine jeweilige Freigabeliste und/oder eine jeweilige Sperrliste von bspw. einem Betreiber eines jeweiligen Kommunikationsnetzwerks fest vorgegeben wird oder bspw. von einem Nutzer oder von zur Durchführung des vorgestellten Verfahrens konfigurierten automatischen Überwachungssystemen, wie bspw. einem von einem Kommunikationsanbieter bereitgestellten Überwachungssystem zum Überwachen eines von dem Kommunikationsanbieter verwalteten Kommunikationsnetzes, dynamisch aktualisiert wird.

Ferner betrifft die vorgestellte Erfindung ein Schutzsystem zum Schützen mindestens Kommunikationspartners in einem technischen Kommunikationsnetzwerk vor automatisch generierten Anruferattacken. Es ist vorgesehen, dass das Schutzsystem mindestens einen Server umfasst, auf dem eine Überprüfungsfunktion implementiert ist, wobei mittels der Überprüfungsfunktion ein potentiell angreifender und den mindestens einen Kommunikationspartner kontaktierender Teilnehmer des Kommunikationsnetzwerks zu überprüfen bzw. überprüfbar ist, indem ein Kommunikationsverhalten des Teilnehmers und/oder ein Kommunikationsverhalten des mindestens einen von dem Teilnehmer kontaktierten Kommunikationspartners ausgewertet wird. Ferner ist vorgesehen, dass der mindestens eine Server dazu konfiguriert ist, in Abhängigkeit eines Ergebnisses einer mittels der Überprüfungsfunktion durchzuführenden bzw. durchgeführten bzw. durchführbaren Auswertung des Kommunikationsverhaltens des Teilnehmers und/oder des Kommunikationsverhaltens des von dem Teilnehmer kontaktierten Kommunikationspartners eine automatische Sicherheitsüberprüfung des Teilnehmers mittels einer Sicherheitsfunktion durchzuführen. Dabei ist vorgesehen, dass die Sicherheitsfunktion einen Turingtest umfasst, um zu überprüfen und festzustellen, ob es sich bei dem Teilnehmer um einen Mensch handelt. Weiterhin ist vorgesehen, dass der mindestens eine Server dazu konfiguriert ist, eine Weiterleitung eines Anrufs des Teilnehmers zu dem mindestens einen Kommunikationspartner in dem Kommunikationsnetzwerk in Abhängigkeit eines Ergebnisses der Sicherheitsüberprüfung zu behandeln und dabei vorzunehmen oder zu verhindern.

Das vorgestellte Schutzsystem dient insbesondere zur Durchführung des vorgestellten Verfahrens.

Ferner betrifft die vorgestellte Erfindung ein Computerprogramm mit Programmcodemitteln, die dazu konfiguriert sind, alle Schritte gemäß dem vorgestellten Verfahren durchzuführen, wenn das Programm auf einem Computer, insbesondere auf dem erfindungsgemäß vorgesehenen und mit dem Kommunikationsnetzwerk in kommunikativer Verbindung stehenden Server, ausgeführt wird.

In einer möglichen Ausgestaltung des vorgestellten Computerprogramms ist vorgesehen, dass das Computerprogramm Programmcodemittel zum Darstellen einer Benutzeroberfläche zum Ändern und Abfragen von Betriebsparametern bzw. Konfigurationen des vorgestellten Verfahrens umfasst.

Mittels einer Benutzeroberfläche, wie bspw. einem in einem Browser darzustellenden Fenster, können jeweilige Betriebsparameter des vorgestellten Verfahrens, wie bspw. ein Schwellenwert zum Einstufen eines Teilnehmers als potentiell gefährdend und entsprechend durch die Sicherheitsfunktion zu überprüfend, von bspw. einem Nutzer einer angegriffenen Leitung bzw. Anschlusses, d. h. von einem Kommunikationspartner, vorgegeben werden.

Weiterhin ermöglicht eine Benutzeroberfläche ein Abfragen und Auswerten von mittels des vorgestellten Verfahrens bzw. mittels des vorgestellten Schutzsystems ermittelten Daten, wie bspw. eine Anzahl und/oder einen geographischen Ursprung von als potentiell gefährdend erkannten Teilnehmern oder eine Anzahl und/oder einen geographischen Ursprung von zur Weiterleitung an jeweilige Kommunikationspartner gesperrten Teilnehmern.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Darstellung einer möglichen Ausführungsform des erfindungsgemäßen Schutzsystems.
Figur 2 zeigt eine schematische Darstellung eines Ablaufs einer möglichen Ausgestaltung des erfindungsgemäßen Verfahrens bei einem sogenannten "CLI Spoofing" Angriff.
Figur 3 zeigt eine schematische Darstellung eines Ablaufs einer möglichen Ausgestaltung des erfindungsgemäßen Verfahrens bei einem sogenannten "Wangiri" Angriff.
Figur 4 zeigt eine schematische Darstellung eines Ablaufs einer möglichen Ausgestaltung des erfindungsgemäßen Verfahrens bei einem Angriff mit einer sogenannten "Call Bomb".

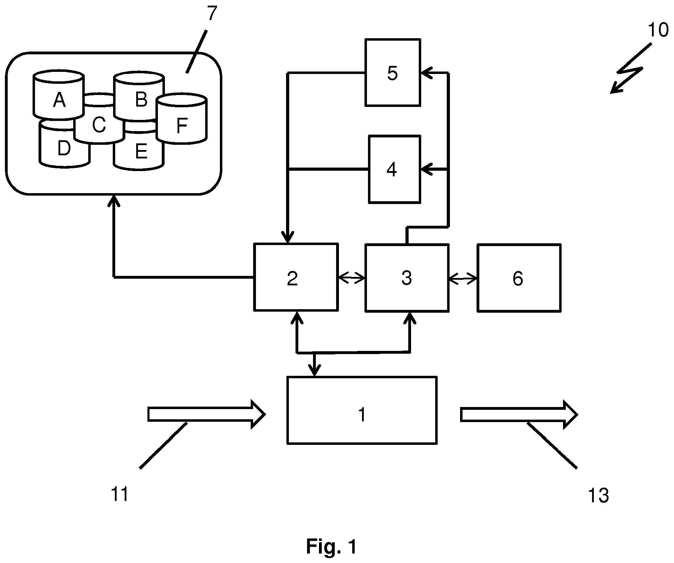

In Figur 1 ist eine Architektur eines Schutzsystems 10 dargestellt. Das Schutzsystem 10 umfasst ein Kommunikationsgerät 1 zum Verwalten von Anrufen, wie bspw. ein Telefon. Das Kommunikationsgerät 1 kann eingehende Anrufe annehmen, wie durch einen Pfeil 11 angedeutet und ausgehende Anrufe generieren, wie durch einen Pfeil 13 angedeutet.

Zum Schutz des Kommunikationsgeräts 1 als Kommunikationspartner in einem Kommunikationsnetz vor automatisch generierten Anruferattacken steht das Kommunikationsgerät 1 bspw. über eine Funkverbindung oder ein Kabel in kommunikativer Verbindung mit einer Analyseeinheit 2 und einem zentralen Kontrollgerät 3.

Das zentrale Kontrollgerät 3, steht weiterhin in kommunikativer Verbindung mit einem Zufallsgenerator 4 und einem Sprachgenerator 5 bzw. führt ein dem Zufallsgenerator 4 bzw. dem Sprachgenerator 5 zugrundeliegendes Programm aus. Dabei kann das Kontrollgerät 3 bspw. als Teil einer Basisstation des Kommunikationsnetzwerks ausgestaltet sein. Das zentrale Kontrollgerät 3 kann mittels einer Benutzerschnittstelle 6, d. h. einem sogenannten "FrontEnd Unit" bspw. in Form einer im Internet bereitgestellten grafischen Benutzeroberfläche, die über ein mit einer Anzeige und einem Eingabemedium, wie bspw. einer Computertastatur ausgestattetes System von einem Nutzer, wie bspw. einem Verwalter des Kontrollgeräts 3 oder einem Nutzer des Kommunikationsnetzwerks zu steuern ist, kontrolliert bzw. konfiguriert werden.

Die Analyseeinheit 2 erhält Informationen von dem Zufallsgenerator 4 sowie dem Sprachgenerator 5 und steht weiterhin in kommunikativer Verbindung mit dem zentralen Kontrollgerät 3, dem Kommunikationsgerät 1 und einer Datenbank 7. Die Analyseeinheit 2 kann auch in dem Kontrollgerät 3 implementiert sein.

Insbesondere kann vorgesehen sein, dass die Analyseeinheit 2, das Kontrollgerät 3, der Zufallsgenerator 4 und der Sprachgenerator 5 in dem erfindungsgemäß vorgesehenen mit dem Kommunikationsnetz in kommunikativer Verbindung stehenden Server zusammengefasst bzw. darin implementiert sind. Selbstverständlich können die Analyseeinheit 2, das Kontrollgerät 3, der Zufallsgenerator 4 und der Sprachgenerator 5 auch einzeln vorgesehen sein und mit dem erfindungsgemäß vorgesehenen mit dem Kommunikationsnetz in kommunikativer Verbindung stehenden Server lediglich über eine Kommunikationsschnittstelle, wie bspw. ein Drahtlosnetzwerk, kommunizieren. "In kommunikativer Verbindung stehend" bedeutet im Rahmen der vorliegenden Offenbarung, dass Daten sowie Steuerbefehle ausgetauscht werden können.

Die Analyseeinheit 2 führt eine Überprüfung von an dem Kommunikationsgerät 1 eingehenden Anrufen und/oder von durch das Kommunikationsgerät 1 initialisierten Anrufen durch. Dazu überprüft die Analyseeinheit 2 ein Kommunikationsverhalten des Kommunikationsgeräts 1 und/oder ein Kommunikationsverhalten eines das Kommunikationsgerät 1 kontaktierenden Teilnehmers anhand von bspw. in einer Freigabeliste A hinterlegten Verbindungsinformationen, ob das Kommunikationsgerät 1 bzw. der das Kommunikationsgerät 1 kontaktierende Teilnehmer mittels einer Sicherheitsfunktion zu überprüfen ist. Dabei kann bspw. von einem Nutzer über die Benutzerschnittstelle 6 mittels des zentralen Kontrollgeräts 3 eine Regel vorgegeben werden, gemäß derer ein jeweiliger das Kommunikationsgerät 1 kontaktierender Teilnehmer lediglich dann nicht mittels der Sicherheitsfunktion zu überprüfen ist, wenn dessen Anruferkennung, d. h. ein dem Teilnehmer zugewiesener Identifikationscode, wie bspw. eine Rufnummer, in der Freigabeliste A hinterlegt ist. Entsprechend prüft die Analyseeinheit 2 mittels einer Überprüfungsfunktion, ob die Anruferkennung des das Kommunikationsgerät 1 kontaktierenden Teilnehmers in der Freigabeliste A hinterlegt ist. Sollte die Anruferkennung des das Kommunikationsgerät 1 kontaktierenden Teilnehmers nicht in der Freigabeliste A hinterlegt sein, wird der Teilnehmer mittels der Sicherheitsfunktion überprüft.

Zum Überprüfen des das Kommunikationsgerät 1 kontaktierenden Teilnehmers mittels der Sicherheitsfunktion kann dem Teilnehmer bspw. eine mittels des Zufallsgenerators 4 generierte Ziffernfolge unter Verwendung des Sprachgenerators 5 ausgegeben werden, die als Turingtest von dem Teilnehmer mittels eines Mehrfrequenzwahlverfahrens (DTMF) zu bestätigen, d. h. bspw. auf einem Wahlfeld eines Endgeräts des Teilnehmers, und an die Analyseeinheit 2 zu übermitteln ist. Alternativ zur Nutzung des Mehrfrequenzwahlverfahrens kann die generierte Ziffernfolge auch über eine Spracheingabeeinheit, wie bspw. ein Mikrofon, eingegeben und an die Analyseeinheit 2 übermittelt werden.

Wird die Ziffernfolge korrekt übermittelt, ist der Turingtest bestanden und es kann davon ausgegangen werden, dass es sich bei dem Teilnehmer um einen Menschen und entsprechend nicht um eine Maschine handelt. Ferner kann der Teilnehmer aufgefordert werden, seine Anruferkennung (CLI) per DTMF einzugeben bzw. zu bestätigen. Die bestätigte Anruferkennung wird mit einer Blacklist abgeglichen und ggf. einer Plausibilitätsprüfung unterzogen. Ferner wird sie mit einer aufgrund der aktuell aufgebauten Verbindung für den Teilnehmer bereitgestellten Anruferkennung abgeglichen. Ist die eingegebene Anruferkennung plausibel und nicht in der Blacklist enthalten, wird auf Basis dieser eingegebenen Anruferkennung der Teilnehmer zu dem Kommunikationsgerät 1 weitergeleitet. Eine Abrechnung erfolgt sodann in der Regel auf Basis dieser eingegebenen Anruferkennung. Weicht die eingegebene Anruferkennung von der aktuell mit dem bisherigen Verbindungsaufbau assoziierten Anruferkennung ab, so wird dies als Hinweis auf einen betrügerischen einspeisenden Carrier gewertet und bei einem Incident/Qualitäts-Management im Hinblick auf den einspeisenden Carrier berücksichtigt.

Wird die Ziffernfolge nicht oder nicht korrekt an die Analyseeinheit 2 übermittelt, kann davon ausgegangen werden, dass es sich bei dem Teilnehmer um eine Maschine bspw. zur Initiierung einer automatisch generierten Anruferattacke handelt und eine Weiterleitung, d. h. eine Verbindung des das Kommunikationsgerät 1 kontaktierenden Teilnehmers mit dem Kommunikationsgerät 1 verhindert werden muss.

Um eine jeweilige Ziffernfolge an den Teilnehmer zu übermitteln, kann der Sprachgenerator 5 auf eine Ansagen-Datenbank B zugreifen, die bspw. Sprachdateien enthält. In einer Opt-out-Datenbank C kann ein Nutzer des Kommunikationsgeräts 1 festlegen, ob er die Überprüfung mittels der Sicherheitsfunktion für ausgewählte Teilnehmer oder für alle den Nutzer kontaktierenden Teilnehmer aktivieren oder deaktivieren möchte. Entsprechend kann vorgesehen sein, dass die Analyseeinheit 2 vor einer Überprüfung mittels der Sicherheitsfunktion eine Anruferkennung eines zu überprüfenden Teilnehmers bzw. eines zu schützenden Teilnehmers mit der Opt-out-Datenbank abgleicht und ggf. die Sicherheitsfunktion unterbricht bzw. beendet.

In einer Robot-Datenbank D können Anruferkennungen hinterlegt und beim Überprüfen mittels der Überprüfungsfunktion berücksichtigt werden, die bereits als missbräuchlich bzw. schadhaft bekannt sind.

Eine Konfigurations-Datenbank E umfasst jeweilige mittels der Benutzerschnittstelle 6 vorgegebene Anweisungen zur Konfiguration der Analyseeinheit 2 bzw. des zentralen Kontrollgeräts 3.

In einer Berichts-Datenbank F werden mittels der Analyseeinheit 2 erfasste Informationen über ein Kommunikationsverhalten jeweiliger Teilnehmer eines jeweiligen Kommunikationsnetzwerks gespeichert und ggf. zur Auswertung durch einen Nutzer bereitgestellt. Entsprechend kann der Nutzer, wie bspw. ein Techniker eines Kommunikationsanbieters, das Kommunikationsverhalten jeweiliger Teilnehmer auswerten und bspw. in Abhängigkeit eines Kommunikationsverhaltens der Nutzer, d. h. bspw. in Abhängigkeit einer Häufigkeit von durch einen Teilnehmer angeforderten bzw. durchgeführten Anrufen, den Teilnehmer sperren. Ferner können hier auch Berichte zu Abrechnungszwecken im Rahmen von OBR hinterlegt werden.

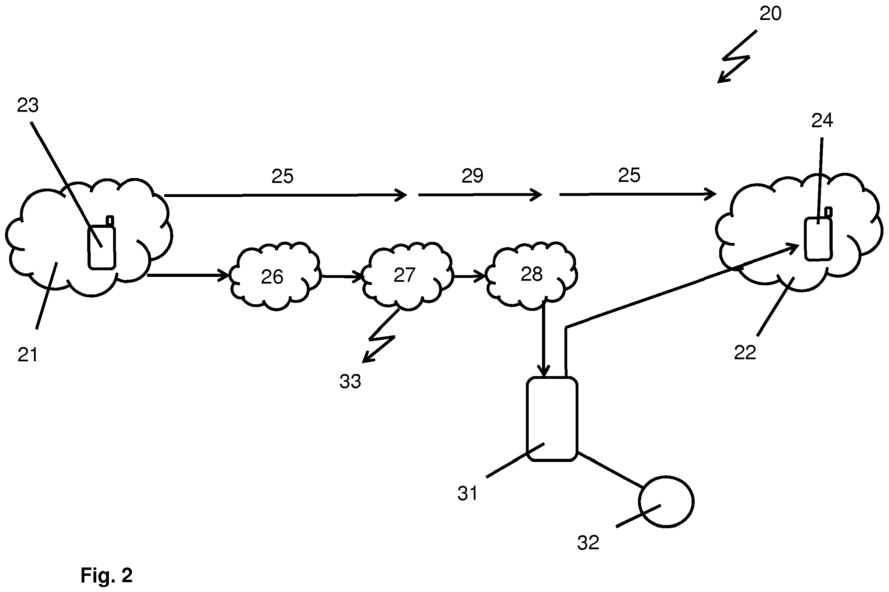

In Figur 2 ist ein Kommunikationsnetzwerk 20 mit einem ersten Teilkommunikationsnetzwerk 21 und einem zweiten Teilkommunikationsnetzwerk 22 dargestellt. Zum Verbinden eines ersten Teilnehmers 23 aus dem ersten Teilkommunikationsnetzwerk 21, das bspw. ein deutsches Netzwerk ist, mit einem zweiten Teilnehmer 24, d. h. einem Kommunikationspartner in dem zweiten Teilkommunikationsnetzwerk 22, das bspw. ein französisches Teilkommunikationsnetzwerk ist, wird eine Anruferkennung 25 des ersten Teilnehmers 23 über einen sogenannten Startcarrier 26 des ersten Teilnetzwerks 21 an einen Transitcarrier 27 und von dem Transitcarrier 27 an einen Zielcarrier 28 des zweiten Teilnetzwerks 22 übertragen.

Um ein einem ersten Teilnehmer 23, der aus dem ersten Teilnetzwerk 21 heraus einen zweiten Teilnehmer 24 in dem zweiten Teilnetzwerk 22 kontaktiert, vor überhöhten Gebühren aufgrund einer sogenannten "Spoofing Attacke", bei der der Transitcarrier 27 die Anruferkennung 25 des ersten Teilnehmers 21 in einem von dem Transitcarrier 27 durchgeführten Weiterleitungsprotokoll in eine manipulierte Anruferkennung 29 ändert, zu schützen, kann das erfindungsgemäß vorgesehene Verfahren bspw. gemäß dem folgenden Schema ablaufen:
1. Der erste Teilnehmer 23 im ersten Teilnetzwerk 21 generiert einen Anruf an den zweiten Teilnehmer 24 in dem zweiten Teilnetzwerk 22.
2. Der Transitcarrier 27 manipuliert die Anruferkennung (CLI) 25 des ersten Teilnehmers 23, wie durch einen Pfeil 33 angedeutet, in eine manipulierte Anruferkennung 29 mit dem Ziel, seine Marge im Rahmen eines Zahlungsmitteltransfers zu optimieren, indem bspw. eine Herkunftsangabe in der Anruferkennung manipuliert und, dadurch bedingt, die manipulierte Anruferkennung 29 erzeugt wird.
3. Die nunmehr verwendete Anruferkennung 29 wird vor einer Weiterleitung bzw. eines finalen Verbindungsaufbaus zu dem zweiten Teilnehmer 24, d. h. dem Kommunikationspartner, mittels einer Überprüfungsfunktion durch ein auf einem Server 31 implementiertes Schutz- bzw. Sicherheitssystem überprüft. Dabei gleicht das auf dem mit dem Kommunikationsnetzwerk in kommunikativer Verbindung stehenden Server 31 implementierte Sicherheitssystem bspw. eine Struktur der Anruferkennung 29 mit einer durch eine Sperrlisten(Blacklist)-Datenbank 32 vorgegebenen Struktur ab. Das Sicherheitssystem bzw. der Server 31 kann in Ausgestaltung mit weiteren bspw. in Zusammenhang mit Figur 1 beschriebenen Datenbanken in Verbindung stehen, wie bspw. einer Robot-Datenbank, einer Opt-Out-Datenbank, einer Reporting(Berichts)-Datenbank und/oder einer Whitelist(Freigaben)-Datenbank und diese entsprechend bei der Prüfung, d. h. der Durchführung bzw. Anwendung der Überprüfungsfunktion und/oder Sicherheitsfunktionen nutzen.
4. Für den Fall, dass die Struktur der Anruferkennung 29 einer durch eine Sperrliste auf der Sperrlisten-Datenbank 32 vorgegebenen Struktur entspricht und bspw. einen Hinweis auf eine besonders kostenintensive Herkunftsangabe enthält, wird der erste Teilnehmer 23 mittels einer Sicherheitsfunktion überprüft. Dazu wird der erste Teilnehmer 23 bspw. dazu aufgefordert, seine Anruferkennung mittels Spracheingabe bereitzustellen. Alternativ zur Spracheingabe kann der erste Teilnehmer 23 auch dazu aufgefordert werden, seine Anruferkennung per DTMF Eingabe zu bestätigen, soweit der erste Teilnehmer 23 eine DTMF Nachwahl-Möglichkeit (z. B. OTT Call) hat. Die von dem ersten Teilnehmer 23 bereitgestellte Anruferkennung 25 kann anschließend mit der aktuell zum finalen Verbindungsaufbau zu dem zweiten Teilnehmer 24 verwendeten Anruferkennung 29 abgeglichen werden.

In möglicher Ausgestaltung wird die von dem ersten Teilnehmer 23 eingegebene Anruferkennung 25 von dem auf dem Server 31 implementierten Sicherheitssystem gegenüber dem Teilnehmer 23 nochmals wiedergegeben bzw. bestätigt.
5. Sollte die von dem ersten Teilnehmer 23 mittels Spracheingabe oder DTMF Eingabe bereitgestellte Anruferkennung 25 mit der an das zweite Teilnetzwerk 22 übermittelten bzw. zum finalen Verbindungsaufbau zum zweiten Teilnehmer 24 vorgesehenen bzw. bis dato verwendeten Anruferkennung 29 übereinstimmen, kann der von dem ersten Teilnehmer 23 erzeugte Anruf an den zweiten Teilnehmer 24 weitergeleitet werden. Sollte die von dem ersten Teilnehmer 23 mittels Spracheingabe oder DTMF Eingabe bereitgestellte Anruferkennung 25 mit der an das zweite Teilnetzwerk 22 übermittelten Anruferkennung 29 nicht übereinstimmen, kann der von dem ersten Teilnehmer 23 erzeugte Anruf von einer Weiterleitung an den zweiten Teilnehmer 24 ausgeschlossen werden. Alternativ kann die von dem ersten Teilnehmer 23 mittels Spracheingabe oder DTMF Eingabe bereitgestellte Anruferkennung als Anruferkennung zum Verbinden mit dem zweiten Teilnehmer 24 verwendet und die Anruferkennung 29 verworfen werden. Die von dem ersten Teilnehmer mittels Spracheingabe oder DTMF Eingabe bereitgestellte Anruferkennung 25 kann vor finalem Verbindungsaufbau zum Kommunikationspartner 24 auch nochmals anhand der Sperrliste (Blacklist) und/oder einer Plausibilitätsprüfung etc. geprüft werden.
6. Die von dem ersten Teilnehmer 23 mittels Spracheingabe oder DTMF Eingabe bereitgestellte Anruferkennung kann ggf. von einem Betreiber des Kommunikationsnetzwerks 20 als Grundlage zur Abrechnung gemäß einem vorgegebenen Tarifmodell verwendet werden.
7. Weiterhin kann der Abgleich zwischen der von dem ersten Teilnehmer 23 mittels Spracheingabe bereitgestellten Anruferkennung 25 und einer an den zweiten Teilnehmer 24 übermittelten Anruferkennung 29 von einem Betreiber des zweiten Teilnetzwerks 22 als Merkmal zur Analyse einer Qualität eines zum Verbinden des ersten Teilnehmers 23 mit dem zweiten Teilnehmer 24 verwendeten Transitcarriers 27 verwendet werden.

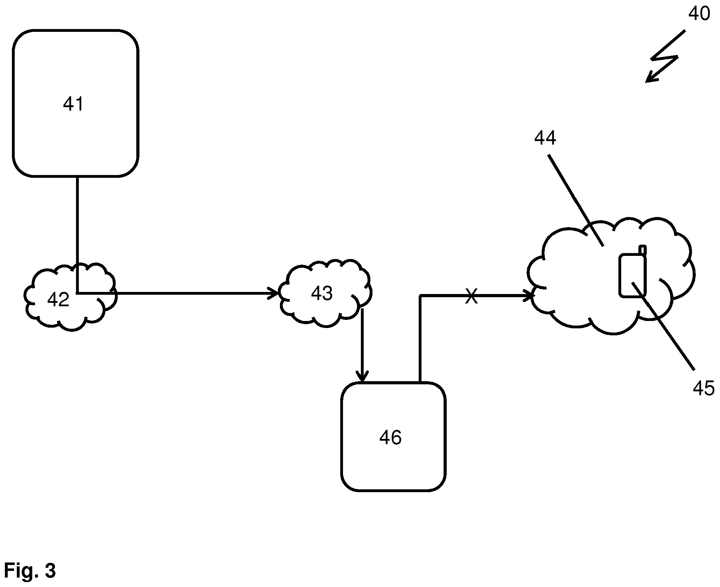

In Figur 3 ist ein Kommunikationsnetzwerk 40 mit einer Maschine 41 zum automatischen Generieren von Anruferattacken dargestellt. Die Maschine 41 ist dazu konfiguriert, eine sogenannte "Wangiri" Attacke durchzuführen, bei der ein oder mehrere Kommunikationspartner 45 in einem Teilkommunikationsnetzwerk 44 automatisch durch einen "Lockanruf" kontaktiert wird bzw. werden, um einen jeweiligen Kommunikationspartner 45 zu einem Rückruf zu motivieren. Dabei ist die Anruferkennung, unter der die Maschine 41 jeweilige Kommunikationspartner 45 kontaktiert und entsprechend zurückgerufen werden kann, sehr kostenintensiv, so dass einem jeweiligen zurückrufenden Kommunikationspartner 45 ein finanzieller Schaden entsteht.

Um jeweilige Kommunikationspartner 45 bzw. das Kommunikationsnetzwerk 40 mittels des erfindungsgemäßen Verfahrens vor einer Wangiri Attacke zu schützen, kann gemäß dem folgenden Schema vorgegangen werden.
1. Die Maschine 41 kontaktiert eine Vielzahl von Kommunikationspartnern 45 in dem Teilkommunikationsnetzwerk 44 mit einer einheitlichen Anruferkennung über einen Zielcarrier 43 und ggf. einen Transitcarrier 42.
2. Unter Verwendung eines auf dem erfindungsgemäß vorgesehenen Server 46 implementierten Sicherheitssystems wird mittels der erfindungsgemäß vorgesehenen Überprüfungsfunktion ein Kommunikationsverhalten der Maschine 41 als potentiell angreifender Teilnehmer analysiert. Dazu kann bspw. eine Anzahl von in einem vorgegebenen Zeitraum durch die Maschine 41 erzeugten Anrufen mit einem vorgegebenen Schwellenwert abgeglichen werden. Sollte die Anzahl der von der Maschine 41 in dem vorgegebenen Zeitraum erzeugten Anrufe den vorgegebenen Schwellenwert übersteigen, wird die Maschine 41 mittels der erfindungsgemäß vorgesehenen Sicherheitsfunktion überprüft.
3. Durch die erfindungsgemäß vorgesehene Sicherheitsfunktion wird die Maschine 41 dazu aufgefordert, eine mittels eines Sprachgenerators wiedergegebene und von einem Zufallsgenerator erzeugte Ziffernfolge per Spracheingabe oder per DTMF Eingabe bereitzustellen. Selbstverständlich kann die Ziffernfolge auch auf einer Anzeigeeinheit oder mittels jedes weiteren technisch geeigneten Wiedergabemediums ausgegeben und mittels einer Tastatur oder jedem weiteren technisch geeigneten Medium bereitgestellt bzw. bestätigt, d. h. eingegeben werden. Da die Maschine 41 kein Sprachausgabemodul umfasst, kann die Maschine 41 die Ziffernfolge nicht empfangen. Ferner verfügt die Maschine 41 über kein Spracheingabemedium oder über ein alternatives Eingabemedium, über welches die Maschine 41 selbst in der Lage wäre, die Ziffernfolge einzugeben und dadurch zu bestätigen. Dadurch wird die Maschine 41 als Maschine erkannt und entsprechend deren initiierten Anrufe von einer Weiterleitung an jeweilige Kommunikationspartner 45 ausgeschlossen.
4. Ein Betreiber des Kommunikationsnetzwerks 40 nutzt Informationen über jeweilige als Maschine erkannte Anruferkennungen, um diese bspw. in eine Sperrliste auf einer Datenbank einzutragen und jeweilige die Anruferkennungen verwendende Vermittlungszentralen zu überbrücken bzw. aus dem Kommunikationsnetzwerk 40 zu entfernen.

Das Sicherheitssystem 46 kann in Ausgestaltung mit weiteren bspw. in Zusammenhang mit Figur 1 beschriebenen Datenbanken in Verbindung stehen, wie bspw. einer Robot-Datenbank, einer Opt-Out-Datenbank, einer Reporting(Berichts)-Datenbank und/oder eine Whitelist(Freigaben)-Datenbank und diese entsprechend bei Durchführung des erfindungsgemäßen Verfahrens, insbesondere bei Durchführung der Überprüfungsfunktion und/oder Sicherheitsfunktion nutzen.

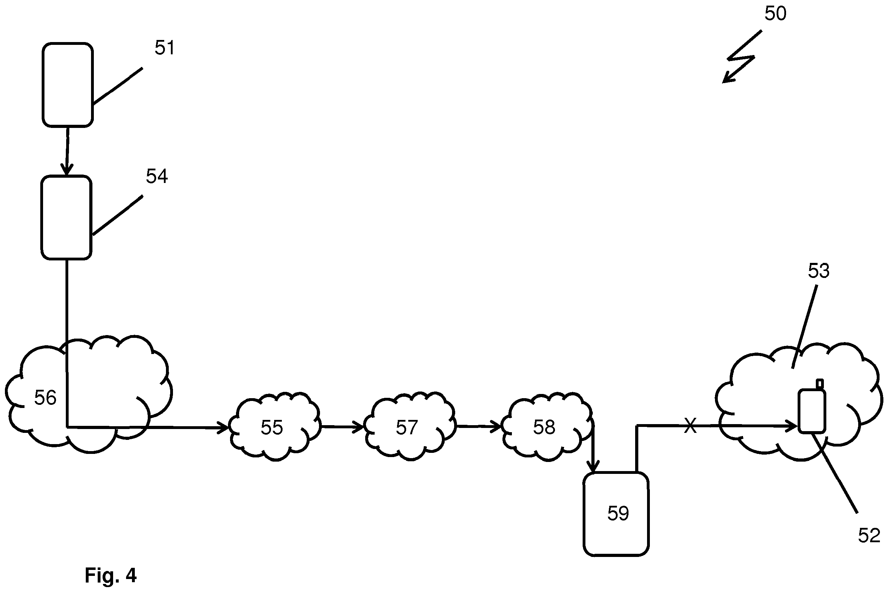

In Figur 4 ist ein Kommunikationsnetzwerk 50 mit einer Maschine 51 zum automatischen Generieren von Anruferattacken dargestellt. Die Maschine 51 ist dazu konfiguriert, eine sogenannte "call bomb" Attacke durchzuführen, bei der ein Kommunikationspartner 52 in einem ersten Teilkommunikationsnetzwerk 53 von der Maschine 51 unter Verwendung eines sogenannten "Voice over IP Servers" 54 angegriffen wird. Dabei verbindet sich die Maschine 51 über den Voice over IP Server 54 mit einem Startcarrier 55 eines zweiten Teilkommunikationsnetzwerks 56. Jeweilige von der Maschine 51 erzeugten Anrufe werden von dem Startcarrier 55 ggf. über einen Transitcarrier 57 an einen Zielcarrier 58 des zweiten Teilkommunikationsnetzwerks 53 und schließlich an den Kommunikationspartner 52 weitergeleitet.

Um den Kommunikationspartner 52 bzw. das Kommunikationsnetzwerk 50 mittels des erfindungsgemäßen Verfahrens vor einer "call bomb" Attacke zu schützen, kann gemäß dem folgenden Schema vorgegangen werden.
1. Die Maschine 51 generiert eine Vielzahl, bspw. zehntausende Anrufe auf den Kommunikationspartner 52 unter Verwendung verschiedener Anruferkennungen.
2. Mittels eines auf dem erfindungsgemäß vorgesehenen Server 59 implementierten Schutz- bzw. Sicherheitssystems wird unter Verwendung einer Überprüfungsfunktion ein Kommunikationsverhalten der Maschine 51 bzw. ein Kommunikationsverhalten des von der Maschine 51 kontaktierten Kommunikationspartners 52 überprüft. Dazu wird ein Kommunikationsverhalten der Maschine 51 ausgewertet, indem bspw. eine Anzahl von durch die Maschine 51 innerhalb eines vorgegebenen Zeitintervalls erzeugten und an eine oder wenige Kommunikationspartner 52 gerichteten Anrufen mit einem Schwellenwert abgeglichen wird. Sollte die Anzahl der von der Maschine 51 erzeugten Anrufe über dem Schwellenwert liegen, wird eine Überprüfung der Maschine 51 mittels einer Sicherheitsfunktion eingeleitet. Im Fall einer "call bomb" Attacke wird eine Anzahl von zu dem Kommunikationspartner 52 in einem vorgegebenen Zeitraum aufgebauten Anrufen mit einem dafür definierten Schwellenwert verglichen. Übersteigt die festgestellte Anzahl den Schwellenwert, wird jeder anrufende Teilnehmer, identifizierbar bspw. über seine jeweilige Anruferkennung, mittels der Sicherheitsfunktion überprüft. Gehen alle Anrufe der jeweiligen Anruferkennungen der jeweiligen Teilnehmer von der Maschine 51 aus, so wird beim Überprüfen der jeweiligen Teilnehmer indirekt die Maschine 51 überprüft.
3. Durch die Sicherheitsfunktion wird der Maschine 51 ein Turingtest bereitgestellt, der bspw. eine Eingabe einer per Zufallsgenerator erzeugten und mittels eines Sprachgenerators ausgegebenen Ziffernfolge umfasst. Alternativ kann der Turingtest auch eine Eingabe einer jeweilig verwendeten Anruferkennung umfassen. Dabei muss die Eingabe bspw. unter Verwendung eines Mehrfrequenzwahlverfahrens erfolgen.
4. Da die Maschine 51 weder in der Lage ist, die durch den Sprachgenerator erzeugte Ausgabe zu interpretieren, noch eine Eingabe mittels eines Mehrfrequenzwahlverfahrens bereitzustellen, fällt der Turingtest negativ aus, so dass die Maschine 51 als Maschine erkannt wird und durch die Sicherheitsfunktion deren initiierten Anrufe von einer Weiterleitung an den Kommunikationspartner 52 ausschließt.
5. Anhand von Informationen darüber, welche Anruferkennungen als maschinelle Angreifer erkannt wurden, generiert ein Betreiber des Kommunikationsnetzwerks 50 eine Liste von zu sperrenden Anruferkennungen bzw. von zu sperrenden Vermittlungszentralen bzw. Startcarrier 55 und Transitcarrier 57, über die jeweilige maschinelle Angreifer agieren.

Das Sicherheitssystem bzw. der Server 59 kann in Ausgestaltung mit weiteren bspw. in Zusammenhang mit Figur 1 beschriebenen Datenbanken in Verbindung stehen, wie bspw. einer Robot-Datenbank, einer Opt-Out-Datenbank, einer Reporting(Berichts)-Datenbank und/oder eine Whitelist(Freigaben)-Datenbank und diese bei der Überprüfungsfunktion und/oder der Sicherheitsfunktion nutzen.

## Patentansprüche

1. Verfahren zum Schützen mindestens eines Kommunikationspartners in einem Kommunikationsnetzwerk vor automatisch generierten Anruferattacken, bei dem mindestens ein den mindestens einen Kommunikationspartner kontaktierender Teilnehmer (23, 41, 51) des Kommunikationsnetzwerks (20, 40, 50) mittels einer auf mindestens einem mit dem Kommunikationsnetzwerk (20, 40, 50) in kommunikativer Verbindung stehenden Server (3, 31, 46, 59) implementierten Überprüfungsfunktion, die ein Kommunikationsverhalten des Teilnehmers (23, 41, 51) und/oder ein Kommunikationsverhalten des mindestens einen von dem Teilnehmer (23, 41, 51) kontaktierten Kommunikationspartners (24, 45, 52) auswertet, überprüft wird, und bei dem in Abhängigkeit eines Ergebnisses einer mittels der Überprüfungsfunktion durchgeführten Auswertung des Kommunikationsverhaltens des Teilnehmers (23, 41, 51) und/oder des Kommunikationsverhaltens des mindestens einen von dem Teilnehmer (23, 41, 51) kontaktierten Kommunikationspartners (24, 45, 52) eine automatische Sicherheitsüberprüfung des Teilnehmers (23, 41, 51) mittels einer auf dem mindestens einen Server (3, 31, 46, 59) implementierten Sicherheitsfunktion erfolgt, wobei die Sicherheitsfunktion einen Turingtest zum Überprüfen, ob es sich bei dem Teilnehmer (23, 41, 51) um einen Mensch handelt, umfasst, und bei dem eine Weiterleitung des Teilnehmers (23, 41, 51) zu dem mindestens einen Kommunikationspartner (24, 45, 52) in dem Kommunikationsnetzwerk (20, 40, 50) in Abhängigkeit eines Ergebnisses der Sicherheitsüberprüfung behandelt wird, **dadurch gekennzeichnet, dass**
das Kommunikationsnetzwerk ein erstes Teilnetzwerk (21) und ein zweites Teilnetzwerk (22) umfasst, wobei für den Fall, dass eine von dem Teilnehmer (23, 41, 51) aus dem ersten Teilnetzwerk (21) mittels Spracheingabe oder DTMF Eingabe bereitgestellte Anruferkennung (25) mit einer an das zweite Teilnetzwerk (22) übermittelten Anruferkennung (29) übereinstimmt, der von dem Teilnehmer (23, 41, 51) erzeugte Anruf an den Kommunikationspartner (24, 45, 52) weitergeleitet wird, und für den Fall, dass die von dem Teilnehmer (23, 41, 51) mittels Spracheingabe oder DTMF Eingabe bereitgestellte Anruferkennung (25) mit der an das zweite Teilnetzwerk (22) übermittelten Anruferkennung (29) nicht übereinstimmt, der von dem Teilnehmer (23, 41, 51) erzeugte Anruf von einer Weiterleitung an den Kommunikationspartner (24, 45, 52) ausgeschlossen wird.

2. Verfahren nach Anspruch 1, bei dem die Sicherheitsfunktion im Rahmen des Turingtests eine Anruferkennung des Teilnehmers (23, 41, 51) abfragt, und bei dem eine von dem Teilnehmer (23, 41, 51) bereitgestellte Anruferkennung mit einer von dem Kommunikationsnetzwerk (20, 40, 50) aktuell zum Kontaktieren des Kommunikationspartners (24, 45, 52) verwendeten Anruferkennung abgeglichen wird, und bei dem für den Fall, dass die von dem Teilnehmer (23, 41, 51) bereitgestellte Anruferkennung von der zum Kontaktieren des Kommunikationspartners (24, 45, 52) aktuell verwendeten Anruferkennung abweicht, eine Weiterleitung des Teilnehmers (23, 41, 51) zu dem Kommunikationspartner (24, 45, 52) verhindert oder eine Weiterleitung des Teilnehmers (23, 41, 51) zu dem mindestens einen Kommunikationspartner (24, 45, 52) auf Basis der von dem Teilnehmer (23, 41, 51) bereitgestellten Anruferkennung vorgenommen wird.

3. Verfahren nach Anspruch 1 oder 2, bei dem als Turingtest eine automatisch generierte Aufforderung zum Übermitteln eines Codes an den mindestens einen Server (3, 31, 46, 59) durch den Teilnehmer (23, 41, 51) unter Verwendung einer Benutzerschnittstelle (6) eines mit dem mindestens einen Server (3, 31, 46, 59) in kommunikativer Verbindung stehenden Endgeräts (1) realisiert wird.

4. Verfahren nach Anspruch 3, bei dem als einzugebender Code eine vorgegebene Kennung des Teilnehmers (23, 41, 51) oder eine vorgegebene Kennung des mindestens einen Kommunikationspartners (24, 45, 52) gewählt wird.

5. Verfahren nach Anspruch 3, bei dem als einzugebender Code eine mittels eines Zufallsgenerators (4) erzeugte Ziffernfolge und/oder eine Buchstabenfolge und/oder eine Kombination aus einer Ziffernfolge und einer Buchstabenfolge gewählt wird.

6. Verfahren nach einem der Ansprüche 3 bis 5, bei dem der einzugebende Code mittels einer Eingabe durch ein Mehrfrequenzwahlverfahren und/oder einer Spracheingabe eingegeben werden muss, um ein Ergebnis der Sicherheitsfunktion zu ermöglichen, das die Weiterleitung des Teilnehmers (23, 41, 51) zu dem Kommunikationspartner (24, 45, 52) in dem Kommunikationsnetzwerk (20, 40, 50) erlaubt.

7. Verfahren nach einem der voranstehenden Ansprüche, bei dem die Überprüfungsfunktion überprüft, ob von dem Teilnehmer (23, 41, 51) initiierte Anrufe bzw. Kommunikationsverbindungen in einem vorgegebenen Zeitraum eine vorgegebene Anzahl von Kommunikationsverbindungen überschreitet und bei dem für den Fall, dass der Teilnehmer (23, 41, 51) in dem vorgegebenen Zeitraum die vorgegebene Anzahl von Kommunikationsverbindungen überschreitet, die Sicherheitsfunktion zum Überprüfen des Teilnehmers (23, 41, 51) aktiviert wird.

8. Verfahren nach einem der Ansprüche 1 bis 6, bei dem die auf dem mindestens einen Server (3, 31, 46, 59) ausgeführte Überprüfungsfunktion überprüft, ob ein von einem jeweiligen Teilnehmer (23, 41, 51) kontaktierter jeweiliger Kommunikationspartner (24, 45, 52) in einem vorgegebenen Zeitraum mindestens von einer vorgegebenen Anzahl an Teilnehmern (23, 41, 51) des Kommunikationsnetzwerks (20, 40, 50) kontaktiert wurde und bei dem für den Fall, dass der Kommunikationspartner (24, 45, 52) in dem vorgegebenen Zeitraum von mindestens der vorgegebenen Anzahl an Teilnehmern (23, 41, 51) kontaktiert wurde, die Sicherheitsfunktion zum Überprüfen der jeweiligen den Kommunikationspartner (24, 45, 52) in dem vorgegebenen Zeitraum kontaktierenden Teilnehmer (23, 41, 51) aktiviert wird.

9. Verfahren nach einem der Ansprüche 1 bis 6, bei dem die auf dem mindestens einen Server (3, 31, 46, 59) ausgeführte Überprüfungsfunktion eine dem Teilnehmer (23, 41, 51) mittels eines Identifikationsmoduls zur Kommunikation in dem Kommunikationsnetzwerk zugordnete Kennung mittels einer durch den mindestens einen Server (3, 31, 46, 59) ausgeführten Plausibilitätsprüfung überprüft, und bei dem für den Fall, dass die Kennung des Teilnehmers (23, 41, 51) durch die Plausibilitätsprüfung als nicht plausibel eingestuft wird, die Sicherheitsfunktion zur Überprüfung des Teilnehmers (23, 41, 51) aktiviert wird.

10. Verfahren nach Anspruch 9, bei dem die Plausibilität der Kennung des Teilnehmers (23, 41, 51) mittels einer Liste (A) an freizugebenden Kennungen oder einer Liste an zu sperrenden Kennungen überprüft wird.

11. Verfahren nach Anspruch 10, bei dem die Liste (A) an freizugebenden Kennungen und/oder die Liste an zu sperrenden Kennungen von einem Nutzer des Kommunikationsnetzwerks (20, 40, 50) konfiguriert wird.

12. Schutzsystem zum Schützen mindestens eines Kommunikationspartners in einem Kommunikationsnetzwerk vor automatisch generierten Anruferattacken, wobei das Schutzsystem (10) mindestens einen Server (3, 31, 46, 59) umfasst, auf dem eine Überprüfungsfunktion implementiert ist, wobei mittels der Überprüfungsfunktion mindestens ein den mindestens einen Kommunikationspartner kontaktierender Teilnehmer (23, 41, 51) des Kommunikationsnetzwerks (20, 40, 50) zu überprüfen bzw. überprüfbar ist, indem ein Kommunikationsverhalten des Teilnehmers (23, 41, 51) und/oder ein Kommunikationsverhalten des von dem Teilnehmer (23, 41, 51) kontaktierten Kommunikationspartners (24, 45, 52) ausgewertet wird, und wobei der mindestens eine Server (3, 31, 46, 59) dazu konfiguriert ist, in Abhängigkeit eines Ergebnisses einer mittels der Überprüfungsfunktion durchgeführten bzw. durchzuführenden Auswertung des Kommunikationsverhaltens des Teilnehmers (23, 41, 51) und/oder des Kommunikationsverhaltens des von dem Teilnehmer (23, 41, 51) kontaktierten Kommunikationspartners (24, 45, 52) eine automatische Sicherheitsüberprüfung des Teilnehmers (23, 41, 51) mittels einer Sicherheitsfunktion durchzuführen, wobei die Sicherheitsfunktion einen Turingtest umfasst, um zu überprüfen und festzustellen, ob es sich bei dem Teilnehmer (23, 41, 51) um einen Mensch handelt, und wobei der mindestens eine Server (3, 31, 46, 59) weiterhin dazu konfiguriert ist, eine Weiterleitung des Teilnehmers (23, 41, 51) zu einem Kommunikationspartner (24, 45, 52) in dem Kommunikationsnetzwerk (20, 40, 50) in Abhängigkeit eines Ergebnisses der Sicherheitsüberprüfung zu behandeln, **dadurch gekennzeichnet, dass**
das Kommunikationsnetzwerk ein erstes Teilnetzwerk (21) und ein zweites Teilnetzwerk (22) umfasst, wobei für den Fall, dass eine von dem Teilnehmer (23, 41, 51) aus dem ersten Teilnetzwerk (21) mittels Spracheingabe oder DTMF Eingabe bereitgestellte Anruferkennung (25) mit einer an das zweite Teilnetzwerk (22) übermittelten Anruferkennung (29) übereinstimmt, der von dem Teilnehmer (23, 41, 51) erzeugte Anruf an den Kommunikationspartner (24, 45, 52) weitergeleitet wird, und für den Fall, dass die von dem Teilnehmer (23, 41, 51) mittels Spracheingabe oder DTMF Eingabe bereitgestellte Anruferkennung (25) mit der an das zweite Teilnetzwerk (22) übermittelten Anruferkennung (29) nicht übereinstimmt, der von dem Teilnehmer (23, 41, 51) erzeugte Anruf von einer Weiterleitung an den Kommunikationspartner (24, 45, 52) ausgeschlossen wird.

13. Computerprogramm mit Programmcodemitteln, das dazu ausgelegt ist, alle Schritte gemäß einem Verfahren nach einem der Ansprüche 1 bis 11 durchzuführen, wenn das Programm auf einem Computer, insbesondere dem mindestens einen von dem Schutzsystem (10) nach Anspruch 12 umfassten Server (3, 31, 46, 59) ausgeführt wird.

14. Computerprogramm nach Anspruch 13, wobei das Computerprogramm Programmcodemittel zum Darstellen einer Nutzeroberfläche zum Ändern und Abfragen von Betriebsparametern des Verfahrens nach einem der Ansprüche 1 bis 11 umfasst.

## Claims

1. A method for protecting at least one communication partner in a communication network from automatically generated caller attacks, in which at least one subscriber (23, 41, 51) of the communication network (20, 40, 50), when contacting the at least one communication partner, is verified by means of a check function implemented on at least one server (3, 31, 46, 59) in communicative connection with the communication network (20, 40, 50), which check function evaluates a communication behavior of the subscriber (23, 41, 51) and/or a communication behavior of the at least one communication partner (24, 45, 52) contacted by the subscriber (23, 41, 51), and in which, depending on a result of an evaluation, performed by means of the check function, of the communication behavior of the subscriber (23, 41, 51) and/or the communication behavior of the at least one communication partner (24, 45, 52) contacted by the subscriber (23, 41, 51), an automatic security check of the subscriber (23, 41, 51) is carried out by means of a security function implemented on the at least one server (3, 31, 46, 59), the security function comprising a Turing test for verifying whether the subscriber (23, 41, 51) is a human, and in which forwarding of the subscriber (23, 41, 51) to the at least one communication partner (24, 45, 52) in the communication network (20, 40, 50) is handled depending on a result of the security check,
**characterized in that**
the communication network comprises a first sub-network (21) and a second sub-network (22), wherein in the case that a caller identifier (25) provided by the subscriber (23, 41, 51) from the first sub-network (21) by means of voice input or DTMF input corresponds to a caller identifier (29) sent to the second sub-network (22), the call initiated by the subscriber (23, 41, 51) is forwarded to the communication partner (24, 45, 52), and in the case that the caller identifier (25) provided by the subscriber (23, 41, 51) by means of voice input or DTMF input does not correspond to the caller identifier (29) sent to the second sub-network (22), the call initiated by the subscriber (23, 41, 51) is excluded from being forwarded to the communication partner (24, 45, 52).

2. The method according to claim 1, in which the security function requests a caller identifier of the subscriber (23, 41, 51) within the scope of the Turing test, and in which a caller identifier provided by the subscriber (23, 41, 51) is compared with a caller identifier currently used by the communication network (20, 40, 50) for contacting the communication partner (24, 45, 52), and in which, in the event that the caller identifier provided by the subscriber (23, 41, 51) differs from the caller identifier currently used for contacting the communication partner (24, 45, 52), forwarding of the subscriber (23, 41, 51) to the communication partner (24, 45, 52) is prevented or forwarding of the subscriber (23, 41, 51) to the at least one communication partner (24, 45, 52) is performed on the basis of the caller identifier provided by the subscriber (23, 41, 51).

3. The method according to claim 1 or 2, in which the Turing test is realized as an automatically generated request to have the subscriber (23, 41, 51) send a code to the at least one server (3, 31, 46, 59), using a user interface (6) of a terminal (1) in communicative connection with the at least one server (3, 31, 46, 59).

4. The method according to claim 3, in which a predetermined identifier of the subscriber (23, 41, 51) or a predetermined identifier of the at least one communication partner (24, 45, 52) is selected as the code to be input.

5. The method according to claim 3, in which a numerical sequence generated by means of a random number generator (4) and/or an alphabetic sequence and/or a combination of a numerical sequence and an alphabetic sequence is selected as the code to be input.

6. The method according to any one of claims 3 to 5, in which the code to be input must be entered by means of an input using a dual-tone multifrequency method and/or a voice input, in order to enable a result of the security function that allows the forwarding of the subscriber (23, 41, 51) to the communication partner (24, 45, 52) in the communication network (20, 40, 50).

7. The method according to any one of the preceding claims, in which the check function verifies whether calls and/or communication connections initiated by the subscriber (23, 41, 51) exceed a predetermined number of communication connections within a predetermined time period and in which, in the case that the subscriber (23, 41, 51) exceeds the predetermined number of communication connections within the predetermined time period, the security function for verifying the subscriber (23, 41, 51) is activated.

8. The method according to any one of claims 1 to 6, in which the check function executed on the at least one server (3, 31, 46, 59) verifies whether a respective communication partner (24, 45, 52) contacted by a respective subscriber (23, 41, 51) was contacted within a predetermined time period by at least a predetermined number of subscribers (23, 41, 51) of the communication network (20, 40, 50) and in the case that the communication partner (24, 45, 52) was contacted within the predetermined time period by at least the predetermined number of subscribers (23, 41, 51), the security function for verifying the respective subscribers (23, 41, 51) contacting the communication partner (24, 45, 52) within the predetermined time period is activated.

9. The method according to any one of claims 1 to 6, in which the check function executed on the at least one server (3, 31, 46, 59) verifies an identifier, assigned to the subscriber (23, 41, 51) by means of an identification module for communication within the communication network, by means of a plausibility check executed by the at least one server (3, 31, 46, 59), and in the case that the identifier of the subscriber (23, 41, 51) is not classified as plausible by the plausibility check, the security function for verifying the subscriber (23, 41, 51) is activated.

10. The method according to claim 9, in which the plausibility of the identifier of the subscriber (23, 41, 51) is verified by means of a list (A) of identifiers to be approved or a list of identifiers to be blocked.

11. The method according to claim 10, in which the list (A) of identifiers to be approved and/or the list of identifiers to be blocked is/are configured by a user of the communication network (20, 40, 50).

12. A protection system for protecting at least one communication partner within a communication network from automatically generated caller attacks, wherein the protection system (10) comprising at least one server (3, 31, 46, 59) on which a check function is implemented, wherein at least one subscriber (23, 41, 51) of the communication network (20, 40, 50), when contacting the at least one communication partner, is verified and/or is verifiable by means of the check function by evaluating a communication behavior of the subscriber (23, 41, 51) and/or a communication behavior of the communication partner (24, 45, 52) contacted by the subscriber (23, 41, 51), and wherein the at least one server (3, 31, 46, 59) is configured to execute an automatic security check of the subscriber (23, 41, 51) by means of a security function, depending on a result of an evaluation, performed or to be performed by means of the check function, of the communication behavior of the subscriber (23, 41, 51) and/or the communication behavior of the communication partner (24, 45, 52) contacted by the subscriber (23, 41, 51), the security function comprising a Turing test in order to verify and determine whether the subscriber (23, 41, 51) is a human, and wherein the at least one server (3, 31, 46, 59) is also configured to handle forwarding of the subscriber (23, 41, 51) to a communication partner (24, 45, 52) in the communication network (20, 40, 50) depending on a result of the security check,
**characterized in that**
the communication network comprises a first sub-network (21) and a second sub-network (22), wherein in the case that a caller identifier (25) provided by the subscriber (23, 41, 51) from the first sub-network (21) by means of voice input or DTMF input corresponds to a caller identifier (29) sent to the second sub-network (22), the call initiated by the subscriber (23, 41, 51) is forwarded to the communication partner (24, 45, 52), and in the case that the caller identifier (25) provided by the subscriber (23, 41, 51) by means of voice input or DTMF input does not correspond to the caller identifier (29) sent to the second sub-network (22), the call initiated by the subscriber (23, 41, 51) is excluded from being forwarded to the communication partner (24, 45, 52).

13. A computer program with program code means that is designed to execute all the steps of a method according to any one of claims 1 to 11, when the program is run on a computer, especially the at least one server (3, 31, 46, 59) comprised by the protection system (10) according to claim 12.

14. The computer program according to claim 13, wherein the computer program comprises program code means for displaying a user interface for modifying and querying operating parameters of the method according to any one of claims 1 to 11.

## Revendications

1. Procédé de protection d'au moins un partenaire de communication dans un réseau de communication contre des attaques téléphoniques générées automatiquement, dans lequel l'au moins un abonné (23, 41, 51) du réseau de communication (20, 40, 50) contactant l'au moins un partenaire de communication est vérifié à l'aide d'une fonction de vérification, implémentée sur au moins un serveur (3, 31,46, 59) en liaison communicative avec le réseau de communication (20, 40, 50), destinée à analyser un comportement de communication de l'abonné (23, 41, 51) et/ou un comportement de communication de l'au moins un partenaire de communication (24, 45, 52) contacté par l'abonné (23, 41, 51), et dans lequel, en fonction d'un résultat d'une analyse du comportement de communication de l'abonné (23, 41, 51) et/ou du comportement de communication de l'au moins un partenaire de communication (24, 45, 52) contacté par l'abonné (23, 41, 51), réalisée à l'aide de la fonction de vérification, une vérification de sécurité automatique est effectuée à l'aide d'une fonction de sécurité implémentée sur l'au moins un serveur (3, 31, 46, 59), la fonction de sécurité comprenant un test de Turing destiné à vérifier si l'abonné (23, 41, 51) est un humain, et dans lequel un acheminement d'appel de l'abonné (23, 41, 51) vers l'au moins un partenaire de communication (24, 45, 52) dans le réseau de communication (20, 40, 50) est traité en fonction d'un résultat de la vérification de sécurité, **caractérisé en ce que**
le réseau de communication comprend un premier réseau partiel (21) et un second réseau partiel (22), dans lequel, au cas où une identification de l'appelant (25) fournie par l'abonné (23, 41, 51) à partir du premier réseau partiel (21) au moyen d'une l'entrée vocale ou d'une entrée DTMF correspondrait à une identification de l'appelant (29) transmise au second réseau partiel (22), l'appel généré par l'abonné (23, 41, 51) est acheminé vers le partenaire de communication (24, 45, 52), et, au cas où l'identification de l'appelant (25) fournie par l'abonné (23, 41, 51) au moyen d'une entrée vocale ou d'une entrée DTMF ne correspondrait pas à l'identification de l'appelant (29) transmise au second réseau partiel (22), l'appel généré par l'abonné (23, 41, 51) est exclu d'un acheminement vers le partenaire de communication (24, 45, 52).

2. Procédé selon la revendication 1, dans lequel, dans le cadre du test de Turing, la fonction de sécurité consulte une identification de l'appelant de l'abonné (23, 41, 51), et dans lequel une identification de l'appelant fournie par l'abonné (23, 41, 51) est comparée avec une identification de l'appelant utilisée actuellement par le réseau de communication (20, 40, 50) pour contacter le partenaire de communication (24, 45, 52), et dans lequel, au cas où l'dentification de l'appelant fournie par l'abonné (23, 41, 51) différerait de l'identification de l'appelant utilisée actuellement pour contacter le partenaire de communication (24, 45, 52), un acheminement d'appel de l'abonné (23, 41, 51) vers le partenaire de communication (24, 45, 52) est empêché ou un acheminement d'appel de l'abonné (23, 41, 51) vers l'au moins un partenaire de communication (24, 45, 52) est effectué sur la base de l'identification de l'appelant fournie par l'abonné (23, 41, 51).

3. Procédé selon la revendication 1 ou 2, dans lequel le test de Turing est réalisé sous forme d'une invitation automatique à ce qu'un code soit transmis à l'au moins un serveur (3, 31, 46, 59) par l'abonné (23, 41, 51) par l'utilisation d'une interface utilisateur (6) d'un terminal (1) en liaison communicative avec l'au moins un serveur (3, 31, 46, 59).

4. Procédé selon la revendication 3, dans lequel une identification prédéfinie de l'abonné (23, 41, 51) ou une identification prédéfinie de l'au moins un partenaire de communication (24, 45, 52) est choisie en tant que code à entrer.

5. Procédé selon la revendication 3, dans lequel une séquence de chiffres générée au moyen d'un générateur aléatoire (4) et/ou une séquence de lettres et/ou une séquence combinée de chiffres et de lettres est choisie en tant que code à entrer.

6. Procédé selon l'une des revendications 3 à 5, dans lequel le code à entrer doit être entré au moyen d'une entrée par un procédé de numérotation multifréquence et/ou au moyen d'une entrée vocale, pour permettre un résultat de la fonction de sécurité qui autorise l'acheminement d'appel de l'abonné (23, 41, 51) vers le partenaire de communication (24, 45, 52) dans le réseau de communication (20, 40, 50).

7. Procédé selon l'une des revendications précédentes, dans lequel la fonction de vérification vérifie si des appels ou des liaisons de communication initiés par l'abonné (23, 41, 51) pendant une période prédéfinie dépassent un nombre prédéfini de liaisons de communication et dans lequel, au cas où l'abonné (23, 41, 51) dépasserait le nombre prédéfini de liaisons de communication pendant la période prédéfinie, la fonction de sécurité est activée pour vérifier l'abonné (23, 41, 51).

8. Procédé selon l'une des revendications 1 à 6, dans lequel la fonction de vérification réalisée sur l'au moins un serveur (3, 31, 46, 59) vérifie si un partenaire de communication (24, 45, 52) respectif contacté par un abonné (23, 41,51) respectif a été contacté pendant une période prédéfinie au moins par un nombre prédéfini d'abonnés (23, 41, 51) du réseau de communication (20, 40, 50) et dans lequel, au cas où le partenaire de communication (24, 45, 52) aurait été contacté pendant la période prédéfinie par au moins le nombre prédéfini d'abonnés (23, 41, 51), la fonction de sécurité est activée pour vérifier les abonnés (23, 41, 51) respectifs contactant le partenaire de communication (24, 45, 52) respectif pendant la période prédéfinie.

9. Procédé selon l'une des revendications 1 à 6, dans lequel la fonction de vérification exécutée sur l'au moins un serveur (3, 31, 46, 59) vérifie une identification attribuée à l'abonné (23, 41, 51) au moyen d'un module d'identification aux fins de la communication dans le réseau de communication par le biais d'un contrôle de plausibilité exécuté par l'au moins un serveur (3, 31, 46, 59), et dans lequel, au cas où l'identification de l'abonné (23, 41, 51) serait qualifiée de non plausible par le contrôle de plausibilité, la fonction de sécurité est activée pour vérifier l'abonné (23, 41, 51).

10. Procédé selon la revendication 9, dans lequel la plausibilité de l'identification de l'abonné (23, 41, 51) est vérifiée au moyen d'une liste (A) d'identifications à autoriser ou d'une liste d'identifications à bloquer.

11. Procédé selon la revendication 10, dans lequel la liste (A) d'identifications à autoriser et/ou la liste d'identifications à bloquer est configurée par un utilisateur du réseau de communication (20, 40, 50).

12. Système de protection destiné à protéger au moins un partenaire de communication dans un réseau de communication contre des attaques téléphoniques générées automatiquement, ledit système de protection (10) comprenant au moins un serveur (3, 31, 46, 59) sur lequel une fonction de vérification est implémentée, dans lequel au moins un abonné (23, 41, 51) du réseau de communication (20, 40, 50) contactant l'au moins un partenaire de communication doit être vérifié ou peut être vérifié au moyen de la fonction de vérification analysant un comportement de communication de l'abonné (23, 41, 51) et/ou un comportement de communication du partenaire de communication (24, 45, 52) contacté par l'abonné (23, 41, 51), et dans lequel l'au moins un serveur (3, 31, 46, 59) est configuré pour effectuer une vérification de sécurité automatique de l'abonné (23, 41, 51) au moyen d'une fonction de sécurité, en fonction d'un résultat d'une analyse du comportement de communication de l'abonné (23, 41, 51) et/ou du comportement de communication du partenaire de communication (24, 45, 52) contacté par l'abonné (23, 41, 51), réalisée ou devant être réalisée au moyen de la fonction de vérification, ladite fonction de sécurité comprenant un test de Turing destiné à vérifier et à constater si l'abonné (23, 41, 51) est un humain, et l'au moins un serveur (3, 31, 46, 59) étant en outre configuré de manière à traiter un acheminement d'appel de l'abonné (23, 41, 51) vers un partenaire de communication (24, 45, 52) dans le réseau de communication (20, 40, 50) en fonction d'un résultat de la vérification de sécurité, **caractérisé en ce que**
le réseau de communication comprend un premier réseau partiel (21) et un second réseau partiel (22), dans lequel, au cas où une identification de l'appelant (25) fournie par l'abonné (23, 41, 51) à partir du premier réseau partiel (21) au moyen d'une entrée vocale ou d'une entrée DTMF correspondrait à une identification de l'appelant (29) transmise au second réseau partiel (22), l'appel généré par l'abonné (23, 41, 51) est acheminé vers le partenaire de communication (24, 45, 52), et, au cas où l'identification de l'appelant (25) fournie par l'abonné (23, 41, 51) au moyen d'une entrée vocale ou d'une entrée DTMF ne correspondrait pas à l'identification de l'appelant (29) transmise au second réseau partiel (22), l'appel généré par l'abonné (23, 41, 51) est exclu d'un acheminement vers le partenaire de communication (24, 45, 52).

13. Programme informatique comportant des moyens de code de programme, conçu pour réaliser toutes les étapes selon un procédé selon l'une des revendications 1 à 11, lorsque le programme est exécuté sur un ordinateur, en particulier sur l'au moins un serveur (3, 31, 46, 59) compris dans le système de protection (10) selon la revendication 12.

14. Programme informatique selon la revendication 13, ledit programme informatique comprenant des moyens de code de programme permettant d'afficher une interface utilisateur pour modifier et consulter des paramètres de fonctionnement du procédé selon l'une des revendications 1 à 11.
